# DEMANDE DE BREVET EUROPEEN

(11) **EP 1 507 122 A1**
(43) Date de publication de la demande: **16.02.2005**
(21) Numéro de dépôt: 04077283.2
(22) Date de dépôt: 10.08.2004
(51) Int. Cl.: F24D 3/08, F24D 3/18

(54) **Installation combinée de chauffage central et de chauffage d'eau sanitaire**

(30) Priorité: 13.08.2003 FR 0309933
(71) Demandeur: Developpement Systemes S.A., 35740 Pace (FR)
(72) Inventeur: Simonessa, Claude, 35740 Pace (FR)
(74) Mandataire: Maillet, Alain

(57) **Abrégé**

La présente invention concerne une installation de chauffage (1) comportant, d'une part, une unité primaire de chauffage (11), et une unité de restitution de la chaleur (15) reliée à ladite unité primaire de chauffage (11) par un circuit primaire de chauffage (12) dans lequel circule un fluide caloporteur, ledit circuit primaire de chauffage (12) comportant une voie aller (12a) prévue pour acheminer le fluide caloporteur de ladite unité primaire de chauffage (11) vers ladite unité de restitution de la chaleur (15) et une voie de retour (12r) prévue pour acheminer le fluide caloporteur de ladite unité de restitution de la chaleur (15) vers ladite unité primaire de chauffage (11) et, d'autre part, un circuit secondaire de chauffage (21) reliant ledit circuit primaire de chauffage (12) à un ballon d'eau sanitaire (23).

Selon l'invention, ledit circuit secondaire de chauffage (21) est monté en dérivation sur une unique voie dudit circuit primaire de chauffage (12) de manière à prélever, puis à réinsérer une partie du fluide caloporteur dans le sens où il circule.

## Description

La présente invention concerne une installation de chauffage.

Une installation de chauffage classique comporte une unité de chauffage reliée à une unité de restitution de la chaleur par l'intermédiaire d'un circuit de chauffage comportant des conduites dans lesquelles circule un fluide caloporteur tel que de l'eau. En fonctionnement, l'unité de chauffage chauffe le fluide caloporteur et l'envoie au travers d'une voie aller du circuit de chauffage vers l'unité de restitution de la chaleur. Dans l'unité de restitution de la chaleur, le fluide caloporteur transfère une partie de sa chaleur à l'air ambiant. Le fluide ainsi refroidi retourne à l'unité de chauffage par une voie retour du circuit de chauffage.

Parallèlement au circuit de chauffage de l'unité de restitution de la chaleur, l'installation comporte couramment un second circuit de chauffage prévu pour chauffer l'eau d'un ballon d'eau sanitaire. Ainsi, le fluide caloporteur provenant de l'unité de chauffage est réparti entre l'unité de restitution de la chaleur et le ballon. De même, les fluides refroidis par le ballon et l'unité de restitution de la chaleur sont mélangés au retour vers l'unité de chauffage. Cette installation mixte permet de n'avoir qu'une unité de chauffage pour deux circuits de chauffage. Cependant, cette installation comporte des inconvénients. L'un des inconvénients majeurs se situe au niveau de la répartition du fluide caloporteur dans les circuits de chauffage. En effet, lorsque l'eau du ballon est chauffée, l'unité de restitution de la chaleur l'est moins et inversement lorsque l'eau du ballon n'est pas chauffée, l'unité de restitution de la chaleur l'est trop. En outre, une grande quantité de fluide caloporteur est déviée pour chauffer l'eau du ballon, ce qui peut perturber l'unité de restitution de la chaleur. Par ailleurs, l'eau du ballon ne nécessite pas un chauffage rapide à l'aide d'un fluide caloporteur très chaud.

Le but de l'invention est donc d'améliorer la régulation des installations de chauffage en proposant une installation de chauffage n'ayant pas les inconvénients précédemment décrits.

A cet effet, la présente invention concerne une installation de chauffage comportant, d'une part, une unité primaire de chauffage, et une unité de restitution de la chaleur reliée à ladite unité primaire de chauffage par un circuit primaire de chauffage dans lequel circule un fluide caloporteur, ledit circuit primaire de chauffage comportant une voie aller prévue pour acheminer le fluide caloporteur de ladite unité primaire de chauffage vers ladite unité de restitution de la chaleur et une voie de retour prévue pour acheminer le fluide caloporteur de ladite unité de restitution de la chaleur vers ladite unité primaire de chauffage et, d'autre part, un circuit secondaire de chauffage reliant ledit circuit primaire de chauffage à un ballon d'eau sanitaire. La présente invention se caractérise en ce que ledit circuit secondaire de chauffage est monté en dérivation sur une unique voie dudit circuit primaire de chauffage de manière à prélever, puis à réinsérer une partie du fluide caloporteur dans le sens où il circule.

Selon une autre caractéristique de l'invention, ledit circuit secondaire de chauffage est monté sur ladite voie de retour dudit circuit primaire de chauffage.

Selon une autre caractéristique de l'invention, l'installation comporte un moyen de transfert d'une quantité de chaleur emmagasinée par un fluide caloporteur circulant dans ledit circuit secondaire de chauffage vers l'eau dudit ballon d'eau sanitaire.

Avantageusement, ledit moyen de transfert est une pompe à chaleur.

Avantageusement, ladite unité de restitution de la chaleur est un plancher chauffant et/ou refroidissant.

Selon une autre caractéristique de l'invention, ladite unité de restitution de la chaleur est un radiateur.

Selon une autre caractéristique de l'invention, ledit circuit secondaire de chauffage comporte une voie aller dans laquelle le fluide caloporteur circule entre ledit circuit primaire de chauffage et ladite pompe à chaleur et une voie retour dans laquelle le fluide caloporteur circule entre ladite pompe à chaleur et ledit circuit primaire de chauffage, ladite voie aller comportant une vanne trois voies reliée à une conduite débouchant sur ladite voie retour.

Avantageusement, ladite unité primaire de chauffage est une pompe à chaleur.

Selon une autre caractéristique de l'invention, ladite unité primaire de chauffage est une chaudière.

Selon une autre caractéristique de l'invention, ledit circuit secondaire de chauffage comporte un circulateur.

Selon une autre caractéristique de l'invention, l'installation comporte des moyens pour commander ladite pompe à chaleur en fonction de la température de l'eau dudit ballon.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente une installation de chauffage d'un ballon d'eau sanitaire selon l'invention ; et
La Fig. 2 représente une vue d'une variante du circuit secondaire de chauffage de l'installation de chauffage selon l'invention.

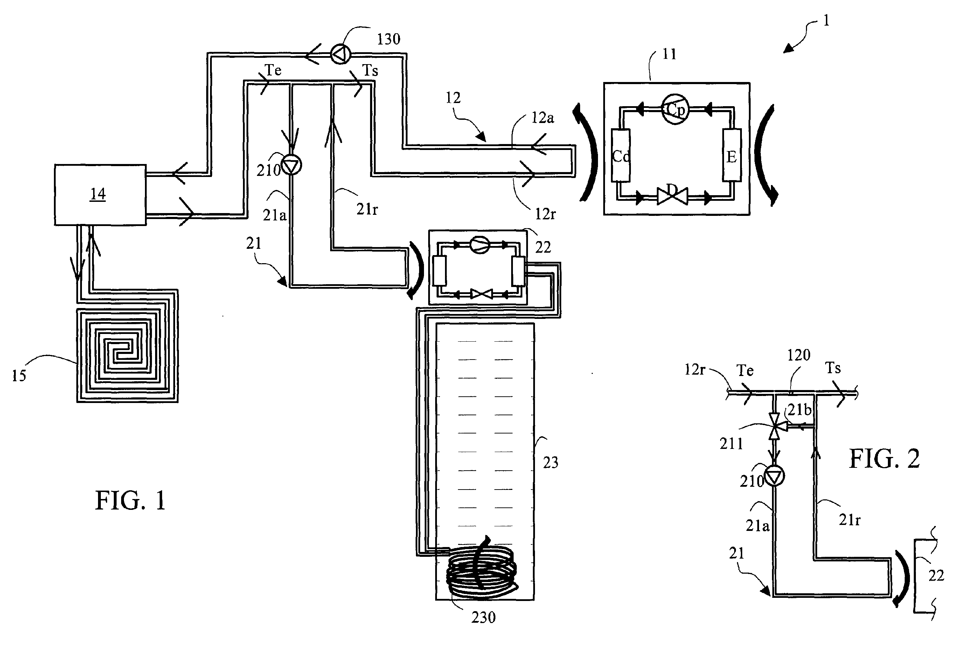

Comme cela est représenté à la Fig. 1, une installation de chauffage 1 comporte une unité primaire de chauffage 11 reliée à une unité de restitution de la chaleur 15 par l'intermédiaire d'un circuit primaire de chauffage 12. Une unité primaire de chauffage 11 est par exemple une pompe à chaleur ou une chaudière. Une unité de restitution de la chaleur 15 est par exemple un ensemble de planchers chauffants et/ou refroidissants ou un ensemble de radiateurs. Le circuit primaire de chauffage 12 transporte un fluide caloporteur sur une voie aller 12a entre l'unité primaire de chauffage 11 et l'unité de restitution de la chaleur 15 et sur une voie de retour 12r à l'inverse. Les voies aller 12a et retour 12r du circuit primaire de chauffage 12 débouchent sur des collecteurs 14 alimentant l'unité de restitution de la chaleur 15. Un circulateur 130 placé sur le circuit primaire de chauffage 12 entraîne la circulation du fluide caloporteur.

Selon l'invention, un circuit secondaire de chauffage 21 est monté en dérivation sur la voie de retour 12r du circuit primaire de chauffage 12. Ce circuit secondaire 21 comporte une voie aller 21a de circulation du fluide caloporteur de la voie de retour 12r vers un ballon d'eau sanitaire 23 et une voie de retour 21r de ce ballon 23 vers la voie de retour 12r. Ce circuit secondaire de chauffage 21 peut comporter un circulateur 210 prévu pour faciliter la déviation du flux de fluide caloporteur vers ce circuit de chauffage 21. Le circuit secondaire de chauffage 21 est relié à une unité secondaire de chauffage 22 prévue pour transférer la chaleur reçue du circuit secondaire de chauffage 21 à l'eau du ballon d'eau sanitaire 23. Ce transfert est réalisé au moyen d'un serpentin 230 placé dans le fond du ballon 23. L'unité secondaire de chauffage 22 est par exemple une pompe à chaleur.

On notera que le fluide caloporteur circule continuellement dans les circuits de chauffage 12 et 21 de l'installation. Ainsi, la température de l'eau est maintenue homogène dans chacune des voies aller et retour des circuits 12 et 21.

Le principe de fonctionnement de l'installation de chauffage 1 selon l'invention est le suivant. L'unité primaire de chauffage 11 chauffe le fluide caloporteur circulant dans le circuit primaire de chauffage 12. Ce fluide caloporteur chaud traverse les collecteurs 14 pour atteindre l'unité de restitution de la chaleur 15. Pendant que le fluide caloporteur circule à travers l'unité de restitution de la chaleur 15, la chaleur du fluide caloporteur est transférée en partie dans le local où est installée l'unité de restitution de la chaleur 15. En sortie de l'unité de restitution de la chaleur 15, la température du fluide caloporteur a une valeur Te, par exemple approximativement égale à 20° C. A la réunion de la voie retour 12r du circuit primaire de chauffage 12 et la voie aller 21a du circuit secondaire de chauffage 21, le flux de fluide caloporteur se divise en deux flux de même température Te. Une majeure partie du flux poursuit sa circulation dans la voie de retour 12r du circuit primaire de chauffage 12. L'autre partie plus infime du flux de fluide caloporteur circule dans la voie aller 21 a du circuit secondaire de chauffage 21. Le circulateur 210 est prévu pour permettre à cette dernière partie du flux d'assurer le débit que l'on souhaite avoir dans l'unité secondaire de chauffage 22. Le fluide caloporteur dérivé par le circuit secondaire de chauffage 21 qui arrive à l'unité secondaire de chauffage 22 lui transfère une partie de sa chaleur en entrée. Cette chaleur est transformée pour chauffer le fluide caloporteur de l'unité secondaire de chauffage 22. Le fluide qui circule alors dans le serpentin 230 du ballon d'eau 23 libère sa chaleur à l'eau.

Pour les cas où le fluide caloporteur en sortie de l'unité de restitution de la chaleur 15 possède une température Te supérieure à environ 25° C, l'invention prévoit de monter une vanne trois voies 211 à l'entrée de la voie aller 21a du circuit secondaire de chauffage 21, comme cela est illustré à la Fig. 2. Ce montage peut par exemple trouver application lorsque l'unité de restitution de la chaleur 15 est un ensemble de radiateurs. La vanne trois voies 211 est montée en série avec la voie aller 21a du circuit secondaire de chauffage 21 et est reliée à une conduite 21b débouchant sur la voie retour 21r. Grâce à la vanne 211, le fluide caloporteur issu de l'unité de restitution de la chaleur 15, arrivant dans le circuit secondaire de chauffage 21 est refroidi par le fluide caloporteur issu de l'unité secondaire de chauffage 22 arrivant par la conduite 21b. Le mélange des deux fluides abaisse la température du fluide destiné à rejoindre l'unité secondaire de chauffage 22. Un clapet anti-retour 120 est en outre monté sur la voie de retour du circuit primaire de chauffage 12 entre les voies aller 21a et retour 21r du circuit secondaire de chauffage 21.

Pour une installation de ce type, le débit dans le circuit primaire de chauffage 12 est habituellement de l'ordre de 1400 litres par heure et le débit dans le circuit secondaire de chauffage 21 est de l'ordre de 200 litres par heure, si bien que le pourcentage de fluide caloporteur à être dérivé est, dans l'exemple choisi, de l'ordre de 14 %. On a pu montrer qu'on obtenait une eau à 55° C dans le ballon 23 en approvisionnant l'unité secondaire de chauffage 22 avec un fluide caloporteur à environ 20° C pendant 7 heures.

L'installation selon l'invention présente l'avantage de ne prélever qu'une faible quantité de fluide caloporteur du circuit primaire de chauffage 12 pour alimenter l'unité secondaire de chauffage 22. Dans l'exemple cité ci-dessus, on n'abaisse que d'environ 1° C la température Ts du fluide caloporteur dans la voie de retour 12r du circuit primaire de chauffage 12 après mélange du fluide caloporteur du circuit primaire de chauffage 12 et du fluide caloporteur du circuit secondaire de chauffage 21. La température Ts du fluide caloporteur retournant à l'unité primaire de chauffage 11 est donc, dans l'exemple ci-dessus, d'environ 19° C. L'unité primaire de chauffage 11 ne consomme que très peu d'énergie pour réchauffer ce fluide caloporteur par rapport à un fluide caloporteur qui aurait été obtenu sans dérivation.

Par contre, le coefficient de performance COP de l'ensemble formé par le ballon d'eau 23 et l'unité secondaire de chauffage 22 correspondant au rapport entre la quantité de chaleur produite par l'unité secondaire de chauffage 22 et la quantité d'énergie électrique consommée par l'unité secondaire de chauffage 22 est amélioré. Dans l'exemple, le COP est de 4. Le ballon 23 pouvant être chauffé sur une longue durée, l'énergie habituellement utilisée pour ce chauffage peut donc être remplacée par l'énergie extraite d'une source naturelle par l'unité primaire de chauffage 11. Le bilan énergétique global est donc positif. On remarquera que l'installation selon l'invention permet de chauffer jusqu'à 900 litres d'eau à 55° C par jour.

On notera par ailleurs que lorsque l'eau du ballon d'eau sanitaire 23 a atteint la température souhaitée, le circulateur 210 et l'unité secondaire de chauffage 22 s'arrêtent de fonctionner. Ainsi, le fluide caloporteur ne circule presque plus dans le circuit secondaire de chauffage 21.

L'installation de chauffage 1 selon l'invention peut également être utilisée en été. Dans ce cas, le fonctionnement de l'installation 1 est inversé. L'unité de restitution de la chaleur 15 devient alors une unité de captage de la chaleur. En effet, le fluide caloporteur non chauffé qui traverse l'unité de restitution de la chaleur 15, capte la chaleur de l'air qui entoure l'unité 15 et la transmet par l'intermédiaire du circuit secondaire de chauffage 21 à l'eau du ballon d'eau sanitaire 23. Ainsi, grâce à l'installation selon l'invention, l'eau du ballon 23 est chauffée gratuitement à l'aide des calories obtenues de l'unité 15. On remarquera en outre que l'utilisation de l'unité secondaire de chauffage 22 évite l'utilisation d'une chaudière et que la faible puissance du compresseur de l'unité secondaire de chauffage 22 évite un risque de condensation dans l'unité 15.

## Revendications

1. Installation de chauffage (1) comportant, d'une part, une unité primaire de chauffage (11), et une unité de restitution de la chaleur (15) reliée à ladite unité primaire de chauffage (11) par un circuit primaire de chauffage (12) dans lequel circule un fluide caloporteur, ledit circuit primaire de chauffage (12) comportant une voie aller (12a) prévue pour acheminer le fluide caloporteur de ladite unité primaire de chauffage (11) vers ladite unité de restitution de la chaleur (15) et une voie de retour (12r) prévue pour acheminer le fluide caloporteur de ladite unité de restitution de la chaleur (15) vers ladite unité primaire de chauffage (11) et, d'autre part, un circuit secondaire de chauffage (21) reliant ledit circuit primaire de chauffage (12) à un ballon d'eau sanitaire (23), **caractérisée en ce que** ledit circuit secondaire de chauffage (21) est monté en dérivation sur une unique voie dudit circuit primaire de chauffage (12) de manière à prélever, puis à réinsérer une partie du fluide caloporteur dans le sens où il circule.

2. Installation de chauffage (1) selon la revendication 1, **caractérisée en ce que** ledit circuit secondaire de chauffage (21) est monté sur ladite voie de retour (12r) dudit circuit primaire de chauffage (12).

3. Installation de chauffage (1) selon la revendication 1 ou 2, **caractérisée en ce qu'**elle comporte un moyen de transfert d'une quantité de chaleur emmagasinée par un fluide caloporteur circulant dans ledit circuit secondaire de chauffage (21) vers l'eau dudit ballon d'eau sanitaire (23).

4. Installation de chauffage (1) selon la revendication 3, **caractérisée en ce que** ledit moyen de transfert est une pompe à chaleur (22).

5. Installation de chauffage (1) selon l'une des revendications précédentes, **caractérisée en ce que** ladite unité de restitution de la chaleur (15) est un plancher chauffant et/ou refroidissant.

6. Installation de chauffage (1) selon l'une des revendications 1 à 4, **caractérisée en ce que** ladite unité de restitution de la chaleur (15) est un radiateur.

7. Installation de chauffage (1) selon l'une des revendications 4 à 6, **caractérisée en ce que** ledit circuit secondaire de chauffage (21) comporte une voie aller (21a) dans laquelle le fluide caloporteur circule entre ledit circuit primaire de chauffage (12) et ladite pompe à chaleur (22) et une voie retour (21r) dans laquelle le fluide caloporteur circule entre ladite pompe à chaleur (22) et ledit circuit primaire de chauffage (12), ladite voie aller (21a) comportant une vanne trois voies (211) reliée à une conduite (21b) débouchant sur ladite voie retour (21r).

8. Installation de chauffage (1) selon l'une des revendications précédentes, **caractérisée en ce que** ladite unité primaire de chauffage (11) est une pompe à chaleur.

9. Installation de chauffage (1) selon l'une des revendications 1 à 7, **caractérisée en ce que** ladite unité primaire de chauffage (11) est une chaudière.

10. Installation de chauffage (1) selon l'une des revendications précédentes, **caractérisée en ce que** ledit circuit secondaire de chauffage (21) comporte un circulateur (210).

11. Installation de chauffage (1) selon l'une des revendications précédentes, **caractérisée en ce qu'**elle comporte des moyens pour commander ladite pompe à chaleur (22) en fonction de la température de l'eau dudit ballon (23).
